# EUROPEAN PATENT APPLICATION

(11) **EP 2 148 454 A1**
(43) Date of publication of application: **27.01.2010**
(21) Application number: 08104847.2
(22) Date of filing: 23.07.2008
(51) Int. Cl.: H04B 10/00, H04J 3/14, H04J 3/16

(54) **PON redundancy system**

(71) Applicant: Nokia Siemens Networks OY, 02610 Espoo (FI)
(72) Inventor: Rehberg, Reinhard, 17495, Sanz (DE)
(74) Representative: Bruglachner, Thomas E.

(57) **Abstract**

The invention describes an extended redundancy system in a passive optical network PON, wherein each optical network terminal ONT of a group is connected via splitters and the optical distribution network ODN with two redundant optical line terminals OLTs, wherein each of the OLTs can receive the downstream signal via an additional feedback splitter to the input of the optical network sided splitter. This enables the OLTs to check the function of the connection between the OLTs and the splitters also when none of the optical network terminals is able to send an upstream signal to the OLTs, especially when all of them are switched off during the night.

## Description

This invention relates to a system for a better redundancy coverage in passive optical networks (PON) comprising optical line terminals (OLT), optical network terminals (ONTs) and optical distribution networks (ODN) with optical lines (OL) and splitters (SP) between them.

An ODN is an optical fibre cabling network in which the central part contains no active electronic devices. It is accessed by users and all of the user signals going upstream and downstream use only passive components such as optical dividers or splitters.

The PON technology is a broadband access technology that has great competitive advantages and is an important technical means that offers user access over the last mile. By using passive optical components in its ODN and optical fibres as the medium for transmission, the technology has the advantage of high bandwidth, high immunity to electromagnetic interference, low loss, low cost, and simple design. In the last years, various PON technologies have become available.

A PON is terminated by ONTs which are integrated electronic units that present standard interfaces to the user. An optical network unit (ONU) is the PON-side part of the ONT and may present one or more converged interfaces, such as xDSL or Ethernet, toward the user. An ONU typically requires a separate subscriber unit to provide native user services such as telephony, Ethernet data, or video.

The interface between the PON and the backbone network is provided by OLTs. An OLT typically includes the

Internet Protocol (IP) traffic over Gigabit, 10G, or 100 Mbit/s Ethernet, standard time division multiplexed interfaces such as SONET/SDH or PDH at various rates, or an ATM User-Network-Interface at 155-622 Mbit/s.

For a better understanding of the state of the art relating to redundancy, the following figures are used:
- Fig. 1: shows the usual tree topology of PONs.
- Fig. 2: shows a completely doubled PON.
- Fig. 3: shows a topology wherein each ONT has two uplink ports for redundancy.
- Fig. 4: shows a topology wherein each ONT has a connection to a neighboured ONT.
- Fig. 5: shows a topology wherein a group of ONTs shares two redundant OLTs wherein one is active and the other one is in standby mode.
- Fig. 6: shows a topology like in Fig. 5 wherein the ONTs are not able to send upstream.

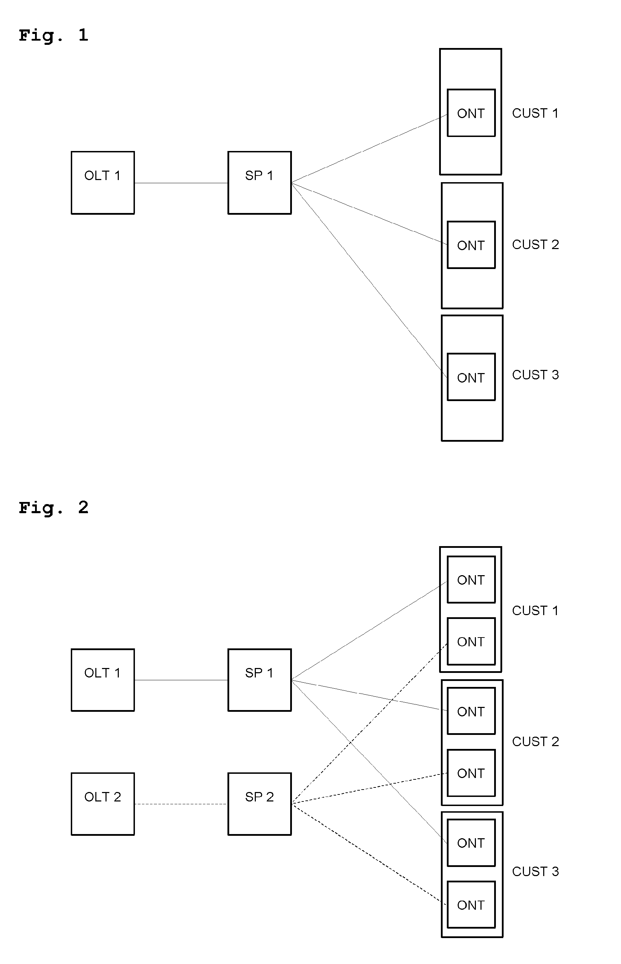

Due to the standard topology shown in Fig. 1, the transmission modes for downstream from OLT to ONT and upstream from ONT to OLT are different. In the downstream direction, the OLT broadcasts the optical signal to all connected ONTs in continuous mode, that means that the downstream channel always has an optical data signal. Each ONT only reads the content of those packets that are addressed to it.

In contrary, in the upstream channel, ONTs can not transmit optical data signals in continuous mode. The Use of continuous mode would result in a disturbance of all of the signals transmitted from the different ONTs which are combined into one optical fibre by the splitter which serves as a power coupler. Therefore, burst mode transmission is adopted for upstream channel. Each ONT only transmits optical data packets when the OLT has allocated a time slot for it and the OLT needs to transmit, so all the ONTs share the upstream channel in the time division multiplexing mode.

To protect the PON system in case of a failures of the network with as few limitations in a failure case as possible, different methods are known. The simplest way is to double all components of the system (Fig. 2). This topology is very reliable, but also the most expensive one.

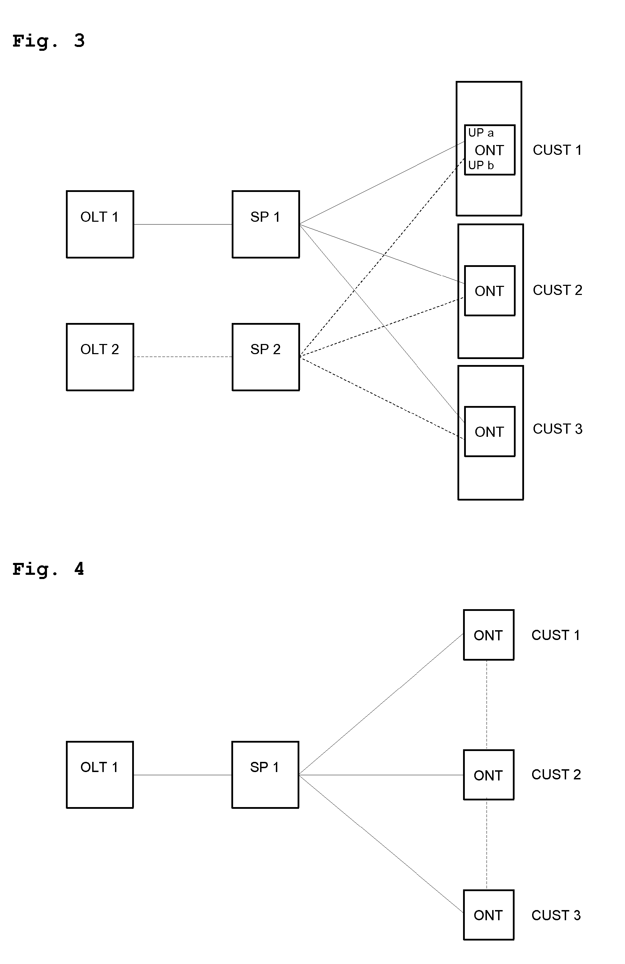

Also known is a topology wherein each customer uses an ONT with two uplink ports (Fig. 3). Each of the two ports has a connection to a separate splitter, and each splitter connects to an own OLT. One of the uplink ports (UP a) with its splitter and OLT is normally active, while the other one (UP b) is in standby mode. In case of a network failure, the standby uplink port with its splitter and OLT will become active and transmit its signal to the higher network hierarchy. This topology is also expensive, since each of the ONTs has to have a part of its components doubled.

Another redundancy solution is described in the patent EP 1 835 641 (Fig. 4), wherein each ONT has a connection to its neighboured ONT of the same ONT group. In case of a failure of the connection of an ONT to its splitter, one of the neighboured ONT can route the communication to the common splitter. This solution requires special more expensive ONTs and only protects a part of the network.

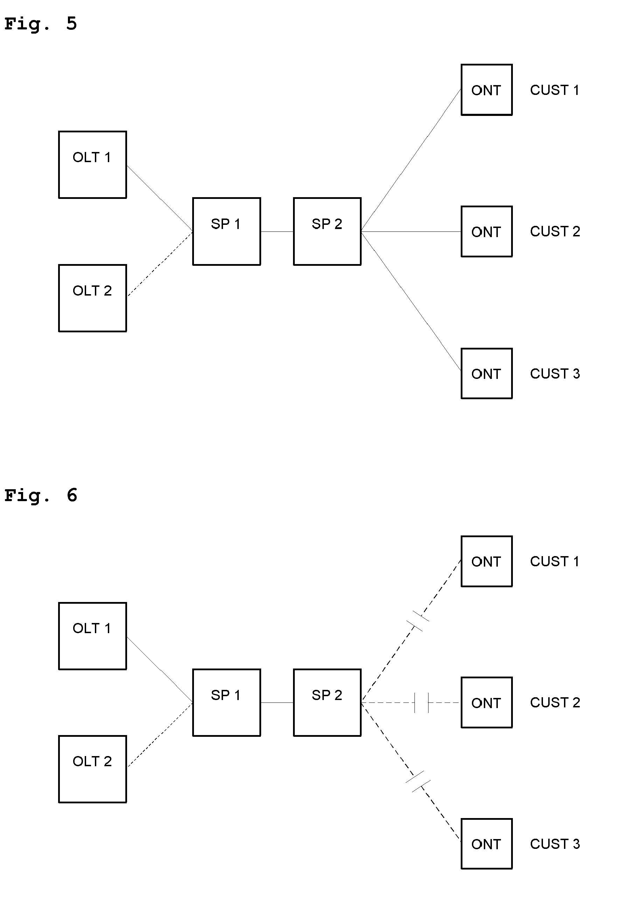

A further known solution (Fig. 5) protects the more important part of the network which is used by multiple customers. In this solution each group of ONTs has a connection over two connected splitters to two OLTs. One of the OLTs (OLT 1) is normally active, while the other one (OLT 2) is normally in standby mode. In case of a failure of the connection of OLT 1 to its splitter (SP 1), the standby OLT (OLT 2) will be activated. In this configuration, a problem occurs. As described before, each ONT can only send upstream if a transmit slot has been reserved for it, if it is requested to send by the OLT, and if it is ready to send a signal to the OLT. To test if the way between OLT 1 and SP 2 is available, a downstream signal from OLT 1 to one of the ONTs and upstream again to OLT 1 is necessary. If the OLT does not receive an upstream signal, the situation is like depicted in Fig. 6, where none of the ONTs can communicate with the OLTs. Two reasons are possible:
- the signal way between OLT 1 and all of the ONTs is really disturbed, or
- none of the ONTs is ready to send, especially if all the ONTs are switched off, e.g. during the night for saving energy, which is an allowed normal operation case.
Therefore, if the OLT 1 gets no upstream signal from the ONTs, the system can not decide, which one of the both described cases has occurred and if the standby OLT should be activate to substitute the other OLT and its optical line. The objective of this invention is to protect important parts of a PON from failures of the network also in the cases when none of the ONTs is transmitting signals in normal operation modes.

This objective can be achieved by a PON system with the features of claim 1 in conjunction with a method with the features of claims 6 or 7.

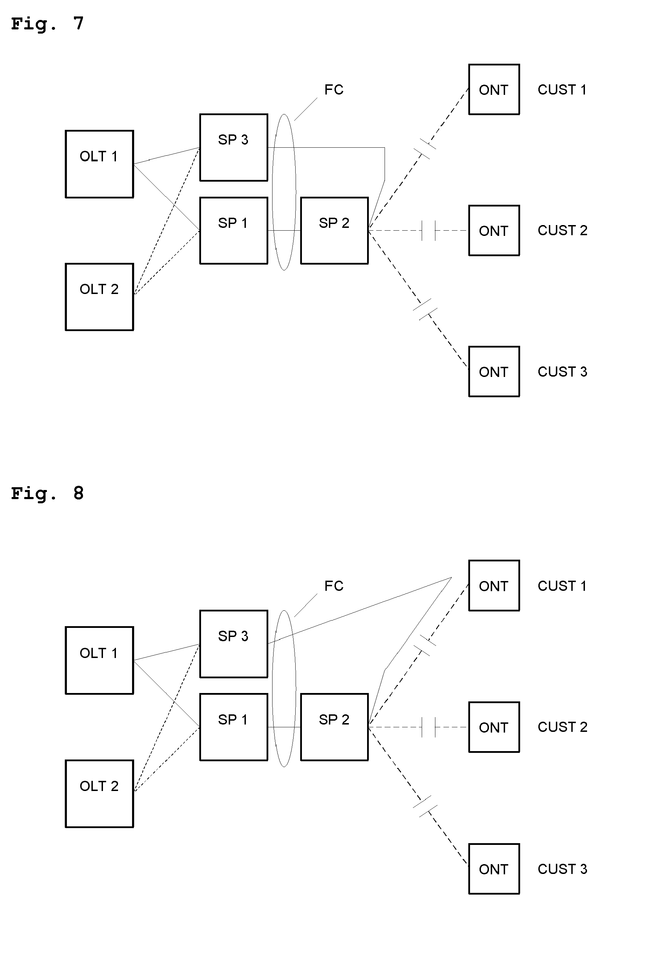

The new solution and their advantages will be explained by help of Fig. 7 to 10:
Fig. 7 shows an enhancement of the topology of Fig. 6, wherein an additional feedback splitter routes the downstream signal back even when none of the ONTs is transmitting.
Fig. 8 shows a topology like Fig. 7 wherein the optical line of the feedback splitter is routed via an ONT.

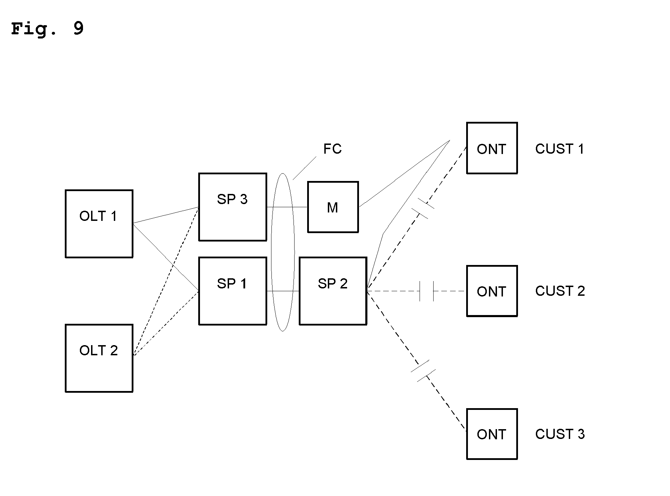

Fig. 9 shows a topology like Fig. 7 wherein a manipulator M amplifies or modifies the feedback splitter signal.

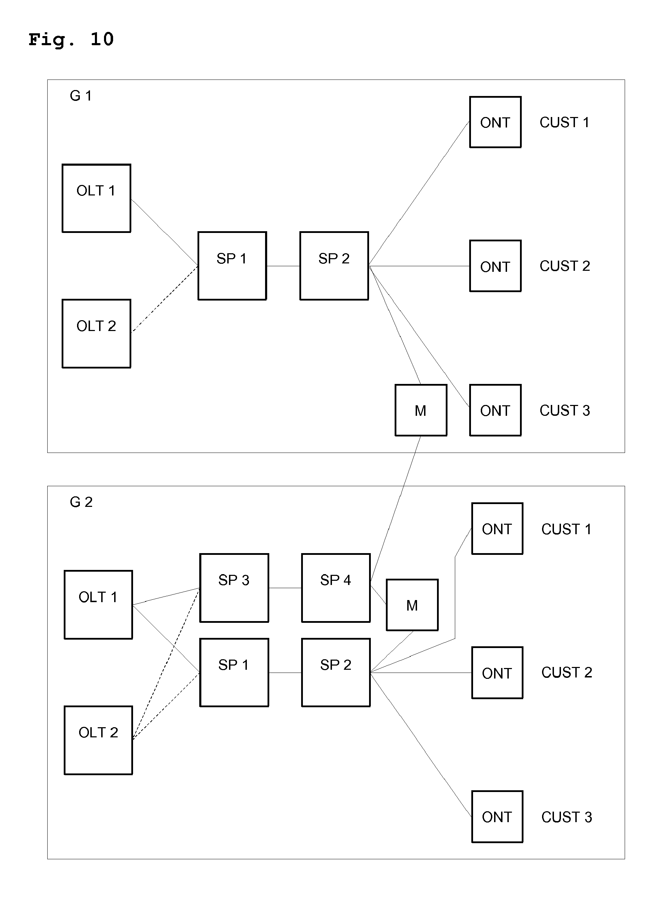

Fig. 10 shows a topology like Fig. 7 wherein an OLT for one OLT group receives additionally a feedback signal of another group.

Starting point of the new solution is a topology like in Fig. 6. In addition to that configuration, one of the outputs of the ONT-sided splitter (SP 2) is fed back to one or both of the OLTs, in the latter case via a feedback splitter (SP 3) (Fig. 7). The feedback signal contains the downstream signal of the sending OLT. One or both of the OLTs include some functionalities of an ONT which enables them to receive this feedback signal. If one of the OLTs receives the feedback signal, this indicates that at least the ODN from the sending OLT to the output of the ONT-sided splitter is in function. For this indication it is not necessary that one of ONTs sends an upstream signal, which is the problem when all of the ONTs are switched off e.g. during the night. If the feedback signal can not be received, it indicates that probably the ODN from the sending OLT to the output of the ONT-sided splitter or the sending OLT itself has a defect and that a switch over to the redundant OLT is necessary.

In a further embodiment of the invention, the check if the feedback signal can be received is only executed when a preceding send request to the ONTs has remained without an answer.

Both solutions require no special ONTs. The implementation of the additional ONT functionality in the OLT is easy, and since the fibre cables between the OLTs and the OLT-sided splitter (SP 1) has normally an unused fibre which one can be used for the feedback signal. In total, the solution described is more cost effective that the configurations shown in Fig. 2 to 4, and more reliable that the solution in Fig. 5.

In a further embodiment of the invention (Fig. 8), the optical line for the feedback signal between splitter 2 and splitter 3 is routed at first from splitter 2 to the location of the ONT for the most important customer (CUST 1), then looped back to splitter 3. The advantage is that when the fibre cable to this customer, which normally would also contain the optical feedback line, is interrupted, then the feedback signal also is interrupted and indicates that the most important customer may not be able to communicate with the OLTs even if the ONT is not switched off and one of the OLTs would be able to operate.

In a further embodiment of the invention (Fig. 9), the feedback signal between splitter 2 and splitter 3 may be manipulated by a manipulator M. The manipulation could be an amplification of the feedback signal, since the length of the optical feedback line between splitter 2 and splitter 3 may be much longer than the optical line between splitter 2 and a normal ONT, especially in the configuration of Fig. 8. The manipulation may also include a timing control for different groups of ONTs.

In a further embodiment of the invention (Fig. 10), two or more optical feedback lines from two or more ONT groups may be united via an additional splitter (SP 4), e.g. to use only one OLT in group 2 (G 2) for checking the feedback signals of its own group and additionally the feedback signal of group 1 (G 1). In this case, amplifications or manipulations of the different feedback signals by different manipulators may be necessary.

### References

- CUST: customer
- CUST 1: most important customer
- FC: Fibre Cable
- G: group of ONTs and OLTs
- M: manipulator unit
- ODN: Optical Distribution Network
- OL: Optical Line
- OLT: Optical Line Terminal
- ONT: Optical Network Terminal
- ONU: Optical Network Unit
- PON: Passive Optical Network
- SP: splitter
- SP 1: OLT-sided splitter
- SP 2: ONT-sided splitter
- SP 3: feedback splitter
- UP: Uplink Port

## Claims

1. A passive optical network (PON) system, comprising
- a group of optical network terminals (ONT),
- an ONT-sided splitter,
- at least two redundant optical line terminals (OLT),
- an OLT-sided splitter,
- an optical distribution network (ODN) consisting of optical lines (OL),
wherein each ONT of the group is connected via the ONT-sided splitter, the OLT-sided splitter and the optical distribution network (ODN) to both of the OLTs;
**characterized in that** at least one of the outputs of the ONT-sided splitter is fed back via an optical line to at least one of the redundant OLTs, wherein this OLT is designed to receive a feedback signal and to check if the feedback signal of the sending OLT is passing the ODN between this OLT, the OLT-sided splitter and the ONT-sided splitter, and in case of a failure to decide that a switch over to another OLT has to be initiated.

2. A redundancy system according to claim 1, **characterized in that** the optical line between the ONT-sided splitter and feedback splitter and is routed via the location of one of the ONTs.

3. A redundancy system according to claim 1, **characterized in that** the optical line with the feedback signal is split by a feedback splitter to all redundant OLTs.

4. A redundancy system according to claim 3, **characterized in that** the feedback signal between the ONT-sided splitter and the feedback splitter passes a modification unit, which amplifies the signal or modifies it by a timing control for different groups of ONTs.

5. A redundancy system according to all claims before, **characterized in that** the feedback signals of two or more ONT groups are supervised by only one OLT in one of the ONT groups.

6. A redundancy method in a passive optical network (PON) with a redundancy system according to one of the claims before, **characterized in that** the check of the feedback signal comprises the following steps:
- checking periodically the feedback signal by at least one of the OLTs,
- switching the data signals to the other OLT if the feedback signal can not be received.

7. A redundancy method according to claim 6, **characterized in that** the check of the feedback signal is only performed in the case that none of the ONTs is transmitting a signal to the OLT.
